# EUROPEAN PATENT SPECIFICATION

(11) **EP 2 878 583 B1**
(45) Date of publication and mention of the grant of the patent: **11.01.2017**
(21) Application number: 14193027.1
(22) Date of filing: 13.11.2014
(51) Int. Cl.: C03B 37/014, C03B 37/012

(54) **METHOD FOR PRODUCING A SILICA GLASS PREFORM FOR OPTICAL FIBRES**
VERFAHREN ZUR HERSTELLUNG EINER QUARZGLASVORFORM FÜR OPTISCHE FASERN
PROCÉDÉ DE PRODUCTION D'UNE PRÉFORME EN VERRE DE SILICE POUR DES FIBRES OPTIQUES

(30) Priority: 28.11.2013 JP 2013245500; 07.10.2014 JP 2014206521
(43) Date of publication of application: 03.06.2015
(73) Proprietor: Shin-Etsu Chemical Co., Ltd., Tokyo 100-0004 (JP)
(72) Inventor: Inoue, Dai, Kamisu-shi, Ibaraki 314-0116 (JP); Oyamada, Hiroshi, Gunma 379-0195 (JP)
(74) Representative: Vossius & Partner Patentanwälte Rechtsanwälte mbB

(56) References cited:
- EP-A1- 2 660 212
- EP-A2- 2 749 917
- US-A1- 2012 304 701
- US-A1- 2012 321 891

## Description

### BACKGROUND

### Technical Field

The present invention relates to a preform for a single-mode optical fiber mainly used for communication and relates particularly to a method for producing a preform for an optical fiber having a low refractive index portion at a position separated from a core.

### Related Art

In a single-mode optical fiber, since only an optical signal of a basic mode propagates, the single-mode optical fiber has been mainly used for long-distance communication as an optical fiber capable of obtaining a high transmission capacity in comparison with a multimode optical fiber in which a mode dispersion due to the fact that the propagation velocity is different for each mode exists. Recently, the range of use of such a single-mode optical fiber is extended to a relatively short distance subscriber system, indoor wiring, and so on. In such a use environment, an assumed bending diameter is small in comparison with the case of a middle/long distance system. Since the optical fiber has a problem that when the optical fiber is bent, light propagating through the optical fiber is likely to leak, there has been required an optical fiber less susceptible to leakage of light even if the bending diameter is the same.

As a standard for such a single-mode optical fiber, there is ITU-T G.657. G.657 is classified into subcategories, and there are subcategories A1, A2, B2, and B3. The A series is required to have compatibility with G.652D. As the number of the second character of the subcategory becomes larger, smaller bending loss is required. Here, the fact that light is less likely to leak even if the bending diameter is the same, i.e., the fact that the bending loss is small means that it is highly resistant to bending.

There have been known several optical fiber structure designs that can be employed to obtain fiber characteristics of high resistance to bending (for example, see JP 2012-250887 A and corresponding US 2012/304701 A1. Further technological background in described in US 2012/321891 A1).

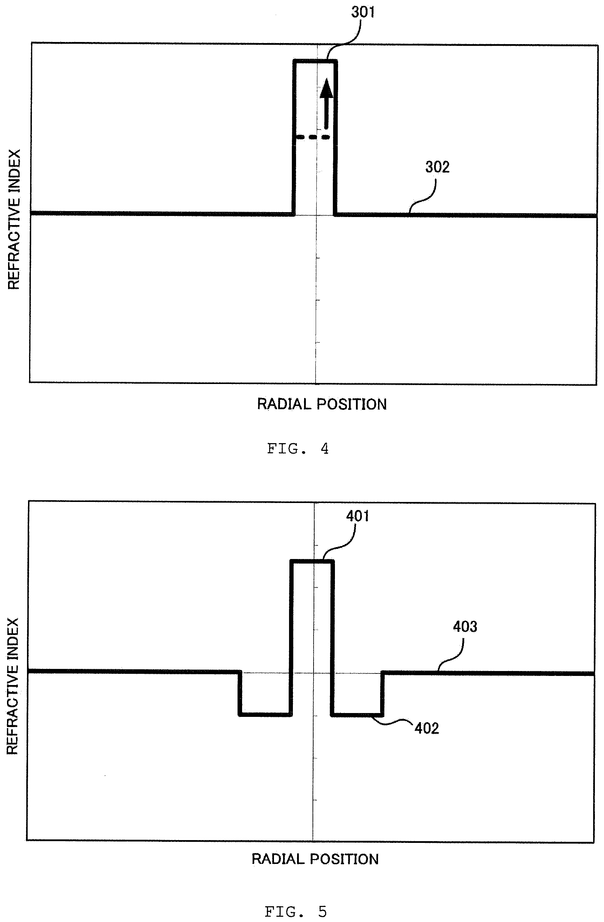

As a first method, as shown in FIG. 4, in a structure having a core 301 and a cladding portion 302, there is a method of increasing the refractive index of the core 301. In the first method, the effect of confining light to the core 301 is enhanced, whereby an optical fiber highly resistant to bending to some extent is most easily produced; however, a mode called a higher order mode other than a basic mode is likely to propagate into the core 301. Although the propagation of the higher order mode can be prevented by reducing the diameter of the core 301, when the diameter of the core 301 is reduced, the optical characteristic called a mode field diameter is reduced, and, in addition, and the optical characteristic called a zero dispersion wavelength is increased, so that there occurs a problem that compatibility with ITU-T G. 652 and G. 657 standards is lost.

As a second method, as shown in FIG. 5, there is a method of reducing the refractive index of a cladding portion (depressed portion) 402 near a core 401. The second method is called a depressed type refractive index distribution. In the depressed type refractive index distribution, while the higher order mode appearing when a substantial refractive index of the core 401 is increased is coupled to a cladding portion 403 outside the depressed portion 402 and leaked, propagation of a basic mode can be secured; therefore, it can be configured that the mode field diameter is not reduced, and, in addition, the zero dispersion wavelength is not increased. Although the bending loss can be reduced while maintaining the compatibility with the ITU-T G.652 standard, when there is provided a refractive index distribution in which the depressed portion 402 is deep to be more highly resistant to bending, the basic mode propagating the core 401 is likely to leak, and therefore, there is a limit to the effect of reducing the bending loss. Thus, there is a problem that the depressed type refractive index distribution does not satisfy some subcategory standards of ITU-T G.657.

As a third method, a high refractive index portion is provided in a cladding portion, and while propagation of a basic mode is secured, a higher order mode is selectively coupled to a leaky clad mode. The third method realizes production of a fiber satisfying all the subcategory standards of ITU-T G.657 while maintaining the compatibility with ITU-T G. 652 standard. However, such precise design that the high refractive index portion is disposed at a position corresponding to a mode distribution of the higher order mode is required, and, in addition, accuracy in the production is required, so that production cost is significantly increased.

As a fourth method, there is a method of providing a hole in the middle of the cladding portion of an optical fiber having a core-clad structure and providing an air layer in the fiber. Since the refractive index of the air layer is substantially 1, there is an effect of confining light propagating the inside in which the hole is disposed. In the fourth method, there is a possibility that the bending loss can be significantly reduced while maintaining the compatibility with the ITU-T G.652 standard. However, if the hole is not precisely disposed, there is a problem that the optical characteristic called a polarization mode dispersion is deteriorated, and, in addition, the optical characteristic called transmission loss is deteriorated due to, for example, cleanliness of an inner surface of the hole, and it is difficult to satisfy the ITU-T standard.

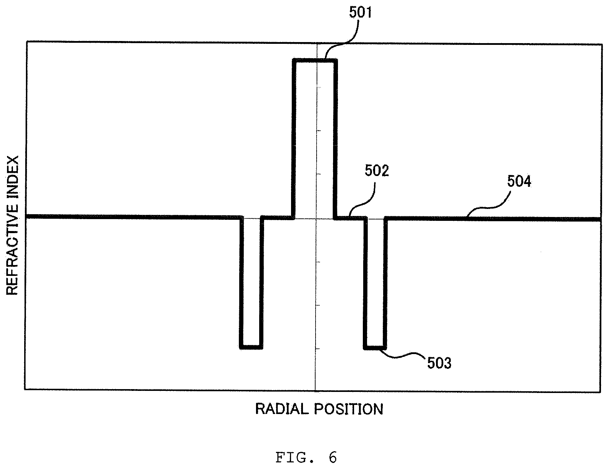

In the fifth method, as shown in FIG. 6, a low refractive index portion (trench portion) 503 is provided at a position slightly separated from the core 501 with an intermediate portion 502 provided between the core 501 and the trench portion 503 and providing a cladding portion 504 outside the trench portion 503. In the fifth method, trailing in a mode distribution shape of a basic mode is suppressed by the trench portion 503, and there is an effect of significantly reducing the ratio of light quantity leaking when bending is applied to an optical fiber. The resistance to bending is changed by the position of the trench portion 503 and a refractive index volume. It is possible to produce a fiber which satisfies all the subcategory standards of ITU-T G.657 while maintaining the compatibility with the ITU-T G.652 standard.

Although the above methods have advantages and disadvantages in the optical characteristics and the productivity, the fifth method of providing the trench portion is particularly excellent from the standpoints of the optical characteristics and the productivity.

### SUMMARY

In one method for producing a preform for a trench-type optical fiber provided with a trench portion, a glass raw material is heated while being poured inside a silica glass tube using an MCVD method, and transparent silica glass is deposited inside the silica glass tube from outside in the radius direction in order of a cladding portion, the trench portion, an intermediate portion, and a core portion. In this method, since the transparent silica glass is required to be deposited inside the silica glass tube while keeping the outer shape of the silica glass tube, a positive dopant for increasing the refractive index of the deposited transparent silica glass and a negative dopant for lowering the refractive index are generally added to the entirety while changing their concentrations. However, there is a problem that an increase in the additive amount of the dopant results in susceptibility of occurrence of Rayleigh scattering and an increase in transmission loss in an optical fiber obtained by drawing. Further, since it is difficult to increase the size of the preform, there is a problem that the production cost is high.

As another method for producing the preform for a trench-type optical fiber, a core rod having a core portion added with a positive dopant and an intermediate portion of pure silica glass by a VAD method or an OVD method and jacketing a tube added with a negative dopant outside the core rod. In this method, since glass doped with fluorine and pure silica glass constituting an intermediate portion of the core rod are significantly different in viscosity, mismatching is likely to occur at an interface between the core rod and a cladding portion in the jacketing, and there is a problem that transmission loss due to structure mismatching loss is likely to occur when a fiber is completed.

It is an object of the present invention to overcome the above problems and to provide a method for producing a silica glass preform for a trench-type optical fiber having excellent optical characteristics. This object is achieved with the features of the claims.

In order to solve the above problems, the method for producing a silica glass preform for an optical fiber according to the invention includes a process for producing a silica glass soot body having a core portion located at the center and added with a positive dopant for increasing a refractive index of silica glass and an intermediate portion provided on an outer circumference of the core portion and having a refractive index lower than that of the core portion, a process for heating the silica glass soot body at a temperature for transparently vitrifying the silica glass soot body in a helium atmosphere containing a negative dopant raw material and forming a first transparent silica glass core rod having the intermediate portion to at least a portion of which a negative dopant is added, a process for giving a silica glass soot layer as a trench portion to an outer circumference of the first core rod, a process for heating the soot layer at a temperature for transparently vitrifying the soot body in the helium atmosphere containing the negative dopant raw material and forming a second transparent silica glass core rod having the trench portion to entire of which the negative dopant is added, and a process for giving silica glass as a cladding portion to an outer circumference of the second core rod.

In the present invention, in the process for forming the first core rod, the negative dopant may be added so that the refractive index becomes lower toward outside in the intermediate portion.

In this invention, it is preferable that the trench portion is added with the negative dopant so that the refractive index is lower than that of the intermediate portion. Further, it is preferable that the negative dopant raw material used in the process for forming the first core rod and the process for forming the second core rod is fluorine, and the negative dopant raw material used in the process for forming the second core rod contains a fluorine-containing gas at a higher concentration than the helium atmosphere containing the negative dopant raw material in the process for forming the first core rod. It is more preferable that the helium atmosphere containing the negative dopant raw material in the process for forming the first core rod is a helium atmosphere containing 0.1 to 10% by volume of a fluorine compound gas selected from SiF₄, CF₄, C₂F₆, and SF₆, and the helium atmosphere containing the negative dopant raw material in the process for forming the second core rod is a helium atmosphere containing 10 to 80% by volume of a fluorine compound gas selected from SiF₄, CF₄, C₂F₆, and SF₆.

In the present invention, it is preferable to further include, between the process for producing the silica glass soot body and the process for forming the first core rod, a process for heating the silica glass soot body at a temperature low enough to prevent the silica glass soot body from being transparently vitrified in an atmosphere in which chlorine is contained in an inert gas. Moreover, it is preferable to further include, between the process for giving the silica glass soot layer and the process for forming the second core rod, a process for heating the silica glass soot layer at a temperature low enough to prevent the silica glass soot layer from being transparently vitrified in the atmosphere in which chlorine is contained in an inert gas.

In the present invention, it is preferable to further include at least one of a process for stretching the first core rod and a process for stretching the second core rod.

In the present invention, it is preferable to further include at least one of a process for removing a predetermined thickness of an outer circumference of the intermediate portion of the first core rod and a process for removing a predetermined thickness of an outer circumference of the trench portion of the second core rod.

In the present invention, it is preferable that density of the silica glass soot body before the transparent vitrification is more than 0.21 g/cm³.

In the present invention, it is preferable that density of the silica glass soot layer before the transparent vitrification is less than 0.21 g/cm³.

### BRIEF DESCRIPTION OF DRAWINGS

FIG. 1 is a pattern diagram showing a refractive index distribution of a silica glass preform 1 for an optical fiber produced by a production method according to an embodiment;
FIG. 2 is a pattern diagram showing each cross-sectional structure of a first core rod 100, a second core rod 110, and the silica glass preform 1 for an optical fiber;
FIG. 3 is a flow chart showing a procedure of the production method according to the embodiment;
FIG. 4 is a pattern diagram of the refractive index distribution showing an example of optical fiber structure design that can be employed to obtain fiber characteristics of high resistance to bending;
FIG. 5 is a pattern diagram of the refractive index distribution showing an example of the optical fiber structure design that can be employed to obtain the fiber characteristics of high resistance to bending; and
FIG. 6 is a pattern diagram of the refractive index distribution showing an example of the optical fiber structure design that can be employed to obtain the fiber characteristics of high resistance to bending.

### DETAILED DESCRIPTION

Hereinbelow, a method for producing a silica glass preform 1 for an optical fiber according to an embodiment of the present invention will be described using examples and comparative examples.

A trench type optical fiber is constituted of a core portion located at the center and having a higher refractive index than pure silica glass, an intermediate portion (or an inner cladding portion) provided adjacent to and around the core portion, a trench portion provided adjacent to and outside the intermediate portion and having a refractive index lower than that of pure silica glass, and a pure silica glass cladding portion (or an outer cladding portion) provided adjacent to and outside the trench portion.

Such a silica glass preform for a trench type optical fiber has a structure having a shape similar to this in the radial direction. The perform is heated and softened at approximately 2100°C to be drawn, and, thus, to become an optical fiber.

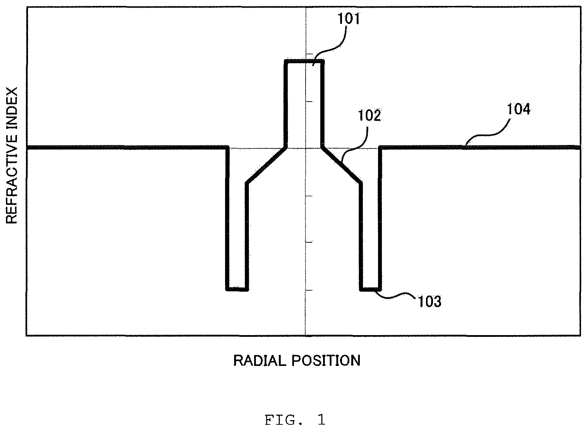

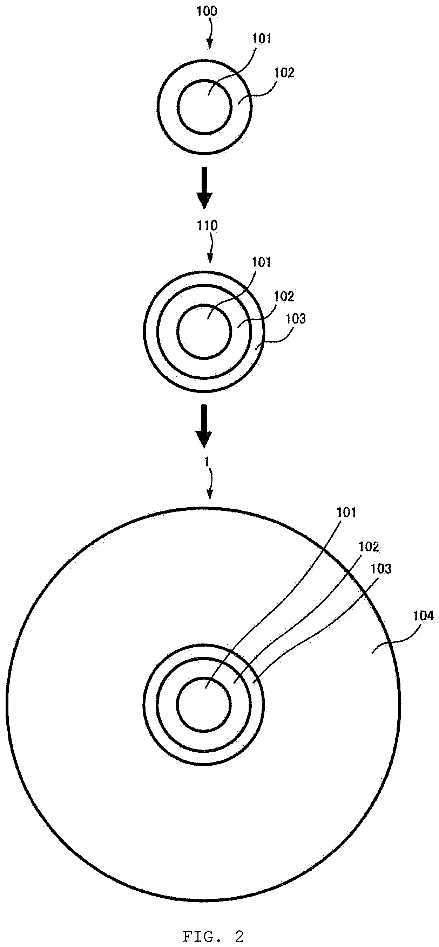

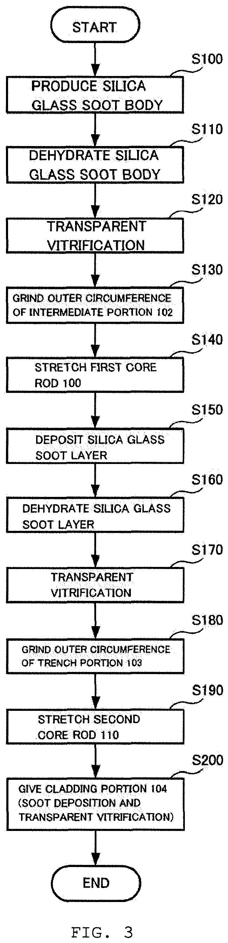

FIG. 1 is a pattern diagram showing a refractive index distribution of a silica glass preform 1 for an optical fiber produced by a production method according to an embodiment. FIG. 2 is a pattern diagram showing each cross-sectional structure of a first core rod 100, a second core rod 110, and the silica glass preform 1 for an optical fiber. FIG. 3 is a flow chart showing a procedure of the production method according to this embodiment. In the silica glass preform 1 for a trench type optical fiber of this embodiment, the first core rod 100 including the core portion 101 and the intermediate portion 102 is produced. Then, a trench portion 103 is given outside the first core rod 100 to form a second core rod 110 constituted of the core portion 101, the intermediate portion 102, and the trench portion 103. Further, a cladding portion 104 is given outside the second core rod 110, whereby the silica glass preform 1 for an optical fiber is produced.

The first core rod 100 may be produced by a soot method such as a VAD method. In the VAD method, a starting glass member is pulled up while being rotated, and glass fine particles mainly composed of silica (SiO₂) are deposited near the tip of the starting glass member (step S100). Oxygen and hydrogen are poured into a burner, and an oxyhydrogen flame is formed. When vaporized silicon tetrachloride (SiCl₄) which is a raw material is poured into the oxyhydrogen flame, SiO₂ is formed by hydrolysis reaction, and glass fine particles are obtained.

The first core rod 100 is constituted of the core portion 101 located at the center and having a high refractive index and the intermediate portion 102 surrounding the circumference of the core portion 101 and having a refractive index lower than that of the core portion 101. In the core portion 101, a positive dopant is added thereto in order to make the refractive index higher than that of pure silica glass. As the positive dopant, GeO₂ is added, for example. In the VAD method, a burner for forming glass fine particles deposited on the core portion 101 and a burner for forming glass fine particles deposited on the intermediate portion are separately provided. Then, in the burner for the core portion 101, SiCl₄ and vaporized germanium tetrachloride (GeCl₄) which is a raw material for a dopant are poured into the oxyhydrogen flame. According to this constitution, SiO₂ added with GeO₂ can be formed, and the core portion 101 is formed by depositing this. Meanwhile, GeCl₄ is not poured into the burner for depositing the intermediate portion 102, and only SiO₂ is formed outside the core portion 101 and deposited as the intermediate portion 102.

A columnar silica glass soot body thus produced is heat-treated in a container heated in an electric furnace called a sintering apparatus. Since the soot body is coupled to a hydroxyl group (-OH) caused by water generated in the oxyhydrogen flame, if the transparent vitrification is performed as it is, a large amount of hydroxyl group stays in a finally finished optical fiber to cause transmission loss. Thus, prior to transparent vitrification, the soot body is dehydrated at a temperature low enough to prevent the soot body from being transparently vitrified and high enough to sufficiently remove moisture, and, for example, approximately 1000 to 1200°C (step S110). At this time, when the soot body is dehydrated in a chlorine-containing atmosphere, the hydroxyl group and chlorine react with each other, whereby the hydroxyl group can be removed effectively.

Transparent vitrification processing is performed subsequent to the dehydration (step S120). It is preferable that the transparent vitrification is continuously performed in the container after the dehydration. According to this constitution, moisture in ambient air can be prevented from being re-adsorbed. The transparent vitrification is performed at a temperature of approximately 1400°C. As an atmosphere gas in the transparent vitrification, a raw material gas of a negative dopant and helium may be used. Helium is a gas having a small molecular size and is easily diffused, and the solubility in glass is high; therefore, helium is less likely to remain as foams in a glass body. As the negative dopant, fluorine (F) is added, for example. In this case, it is preferable that a fluorine-containing gas such as SiF₄, CF₄, SF₆, or C₂F₆ is added to the atmosphere gas in the transparent vitrification. In this embodiment, it is preferable that the addition concentration of the negative dopant such as fluorine is relatively high near an outer circumference of the first core rod 100. According to this constitution, a viscosity difference between the intermediate portion 102 and the trench portion 103 given outside the intermediate portion 102 is reduced, and mismatching can be less likely to occur at an interface. The mismatching at the interface is reduced, and structure mismatching loss can be suppressed; therefore, an increase in the transmission loss can be suppressed. On the other hand, it is preferable that the addition concentration of the negative dopant to the vicinity of the core portion 101 is lower than that at a position away from the core portion 101. According to this constitution, an excessive amount of the positive dopant is not required to be added to the core portion 101, and Rayleigh scattering can be reduced. In order to add the negative dopant at high concentration to the vicinity of the outer circumference and reduce the concentration of the dopant to be added as it approaches inward, it is preferable to make the density of the soot body before the transparent vitrification more than 0.21 g/cm³. The density of the soot body may be adjusted by adjusting the temperature of the oxyhydrogen flame of a burner in the deposition of the soot body. Alternatively, the treatment temperature in the dehydration performed prior to the transparent vitrification is adjusted to a temperature at which the soot body contracts without being transparently vitrified, and the density of the soot body may be adjusted simultaneously with dehydration. It is more preferable that the atmosphere in the transparent vitrification is a helium atmosphere containing 0.1 to 10% by volume of a fluorine-containing gas such as SiF₄, CF₄, SF₆, or C₂F₆.

The first core rod 100 thus transparently vitrified has the intermediate portion 102 whose refractive index is reduced while having an inclination outside the core portion 101 having a high refractive index. A ratio of thickness of the intermediate portion 102 to the radius of the core portion 101 is adjusted to be matched with intended optical characteristics of an optical fiber, and in particular with a mode field diameter. Preferably, the intermediate portion 102 is previously produced to have an excessively large thickness, the refractive index distribution of the transparently vitrified first core rod 100 is measured, an optimum thickness of the intermediate portion 102 is calculated based on the refractive index of the core portion 101 and the refractive index distribution of the intermediate portion 102, and the outer circumference of the intermediate portion 102 is ground so as to obtain a calculated core radius/intermediate portion thickness ratio (step S130). According to this constitution, the optical characteristics can be more precisely designed. In the grinding of the outer circumference, a method of mechanically polishing the outer circumference with a grinding stone or the like or a method of immersing the outer circumference in a hydrofluoric acid aqueous solution or the like and chemically polishing it may be used, and these methods may be combined sequentially.

In order to align finish outer diameter of the first core rod 100 along the longitudinal direction, it is preferable that the rod is stretched to have a predetermined diameter (step S140). For example, the rod is heated and softened using a heat source such as an electric furnace, a plasma-flame burner, or an oxyhydrogen flame burner, and a tensile force is applied in the longitudinal direction, whereby the rod may be stretched so that each portion has a predetermined diameter. The stretching operation is performed in plural stages, and when a diameter contraction amount in single operation is approximately several mm, since diameter accuracy is enhanced, it is preferable. The heat sources may be combined. When the oxyhydrogen flame burner is used as the heat source, adjustment may be performed to prevent an excess of a hydroxyl group from being introduced into a rod surface. The concentration of the hydroxyl group at an interface of the trench portion 103 given outside the intermediate portion 102 is preferably not more than 10 ppm, more preferably not less than 0.3 ppm and not more than 10 ppm, still more preferably not less than 0.5 ppm and not more than 5 ppm. When the concentration of the hydroxyl group introduced into the interface is high, it causes transmission loss in an optical fiber. Meanwhile, structural relaxation at the interface is promoted by adding a suitable amount of the hydroxyl group, and foam formation at the interface and the structure mismatching loss can be suppressed. The order of grinding of the outer circumference of the intermediate portion 102 (steps S130) and stretching of the first core rod 100 (step S140) may be changed. For example, when the outer diameter of the transparently vitrified first core rod 100 varies in the longitudinal direction, the stretching process (S140) is executed prior to the rod outer circumference grinding process (S130), and the diameter variation may be modified. According to this constitution, since the outer circumference may be simply uniformly ground by a predetermined thickness in the grinding process, it is convenient. In this case, after the outer circumference grinding process, a process for introducing a hydroxyl group to the vicinity of the interface again is provided, and the foam formation at the interface and the structure mismatching loss may be suppressed.

Next, the trench portion 103 is given to the outer circumference of the first core rod 100, and the second core rod 110 is produced. In the giving of the trench portion 103, a soot method such as an OVD method may be used. Silica glass fine particles are deposited on a surface of the first core rod 100 rotated about the core portion 101 (step S150). Oxygen and hydrogen are poured into a burner to form an oxyhydrogen flame. When vaporized SiCl₄ which is a raw material is poured into the oxyhydrogen flame, SiO₂ is formed by hydrolysis reaction, and glass fine particles are obtained.

The first core rod 100 on which the silica glass soot layer is thus deposited is then heat-treated by a sintering apparatus. Since a hydroxyl group (-OH) caused by water generated in the oxyhydrogen flame is coupled to the silica glass soot layer deposited on the first core rod 100, if the transparent vitrification is performed as it is, a large amount of hydroxyl group stays in a finally finished optical fiber to cause transmission loss. Thus, prior to transparent vitrification, the soot body is dehydrated at a temperature low enough to prevent the soot layer from being transparently vitrified and high enough to sufficiently remove moisture, and, for example, approximately 1000 to 1200°C (step S160). At this time, when chlorine is heated in a chlorine-containing atmosphere, a hydroxyl group and chlorine react with each other, whereby the hydroxyl group can be removed effectively.

Processing for transparently vitrifying the silica glass soot layer is performed subsequent to the dehydration (step S170). It is preferable that the transparent vitrification is continuously performed in a container after the dehydration. According to this constitution, moisture in ambient air can be prevented from being re-adsorbed. The transparent vitrification is performed at a temperature of approximately 1400°C, and as an atmosphere gas at this time, a raw material gas of a negative dopant and helium may be used. As the negative dopant, fluorine (F) is added, for example. In this case, it is preferable that a fluorine-containing gas such as SiF₄, CF₄, SF₆, or C₂F₆ is added to the atmosphere gas in the transparent vitrification. In order to enhance the bending loss reduction effect according to the trench portion 103, it is preferable that the concentration of the negative dopant in the trench portion 103 is higher than the maximum concentration of the negative dopant in the intermediate portion 102, and it is more preferable that the negative dopant is uniformly added to the trench portion 103. In order to uniformly add the negative dopant to the trench portion 103, it is preferable that the density of the silica glass soot layer before the transparent vitrification is less than 0.21 g/cm³. The negative dopant can be added to the entire soot layer at high concentration by setting the density to such a value. The density of the silica glass soot layer may be adjusted by adjusting the temperature of the oxyhydrogen flame of a burner when the silica glass soot layer is deposited. It is preferable that the treatment temperature in the dehydration performed prior to the transparent vitrification is adjusted not to be excessively high, and the density is prevented from being increased due to contraction of the soot body. It is essential that the content of fluorine in the trench portion 103 is more than that in the intermediate portion 102. In order to increase the content of fluorine in the trench portion 103 more than that in the intermediate portion 102, it is preferable that the atmosphere gas in the transparent vitrification is a helium atmosphere containing a fluorine-containing gas, such as SiF₄, CF₄, SF₆, or C₂F₆, at higher concentration than that in the transparent vitrification of the first core rod 100. It is more preferable that the atmosphere gas in the transparent vitrification is a helium atmosphere containing 10 to 80% by volume of the fluorine-containing gas.

The second core rod 110 in which the soot layer is thus transparently vitrified has a structure having the core portion 101 at the center, the intermediate portion 102 on the outer circumference of the core portion 101, and the trench portion 103 outside the intermediate portion 102. The ratio of the thickness of the trench portion 103 to the radius of the core portion 101 is adjusted to be matched with intended optical characteristics of an optical fiber, and in particular a cutoff wavelength and bending loss characteristics. Preferably, the trench portion 103 is previously produced to have an excessively large thickness, the refractive index distribution of the transparently vitrified second core rod 110 is measured, an optimum thickness of the trench portion 103 is calculated based on the refractive index of the core portion and the refractive index distribution of the trench portion 103, and the outer circumference of the trench portion 103 is ground so as to obtain a calculated core radius/trench portion thickness ratio (step S180). According to this constitution, the optical characteristics can be more precisely designed. In the grinding of the outer circumference, a method of mechanically polishing the outer circumference with a grinding stone or the like or a method of immersing the outer circumference in a hydrofluoric acid aqueous solution or the like and chemically polishing it may be used, and these methods may be combined sequentially.

In order to align finish outer diameter of the second core rod 110 along the longitudinal direction, it is preferable that the rod is stretched to have a predetermined diameter (step S190). For example, the rod is heated and softened using a heat source such as an electric furnace, a plasma-flame burner, or an oxyhydrogen flame burner, and a tensile force is applied in the longitudinal direction, whereby the rod may be stretched so that each portion has a predetermined diameter. The stretching operation is performed in plural stages, and when a diameter contraction amount in single operation is approximately several mm, since the diameter accuracy is enhanced, it is preferable. The heat sources may be combined. When the oxyhydrogen flame burner is used as the heat source, adjustment may be performed to prevent an excess of a hydroxyl group from being introduced into a rod surface. The concentration of the hydroxyl group at the interface of the trench portion 103 given outside the intermediate portion 102 is preferably not more than 100 ppm, more preferably not less than 0.3 ppm and not more than 50 ppm, still more preferably not less than 0.5 ppm and not more than 20 ppm. When the concentration of the hydroxyl group introduced into the interface is high, it causes transmission loss in an optical fiber. Meanwhile, structural relaxation at the interface is promoted by adding a suitable amount of the hydroxyl group, and foam formation at the interface and the structure mismatching loss can be suppressed. The order of grinding of the outer circumference of the trench portion 103 (steps S180) and stretching of the second core rod 110 (step S190) maybe changed. For example, when the outer diameter of the transparently vitrified second core rod 110 varies in the longitudinal direction, the stretching process (S190) is executed prior to the rod outer circumference grinding process (S180), and the diameter variation may be modified. According to this constitution, since the outer circumference may be simply uniformly ground by a predetermined thickness in the grinding process, it is convenient. In this case, after the outer circumference grinding process, a process for introducing a hydroxyl group to the vicinity of the interface again is provided, and foam formation at the interface and the structure mismatching loss may be suppressed.

Next, the cladding portion 104 is given to the outer circumference of the second core rod 110 (step S200), and the preform 1 for optical fiber is produced. In the giving of the cladding portion 104, a soot method such as an OVD method may be used, or a method of jacketing a pure silica glass tube may be used. Those methods may be combined sequentially. In the soot method, silica glass fine particles are deposited on a surface of the second core rod 110 rotated about the core portion 101. Oxygen and hydrogen are poured into a burner to form the oxyhydrogen flame. When vaporized SiCl₄ as a raw material is poured into the oxyhydrogen flame, SiO₂ is formed by hydrolysis reaction, and glass fine particles are obtained.

The second core rod 110 on which the silica glass soot layer is thus deposited is then heat-treated by a sintering apparatus. Since a hydroxyl group (-OH) caused by water generated in the oxyhydrogen flame is coupled to the silica glass soot layer deposited on the second core rod 110, if the transparent vitrification is performed as it is, a large amount of hydroxyl group stays in a finally finished optical fiber. When the amount reaches several hundred ppm, the transmission loss of the optical fiber is not a little affected. Thus, prior to the transparent vitrification, the soot body is dehydrated in a chlorine-containing atmosphere at a temperature low enough to prevent the soot layer from being transparently vitrified and high enough to sufficiently remove moisture, and, for example, approximately 1000 to 1200°C, and after removal of the hydroxyl group, the transparent vitrification is performed in a helium gas atmosphere at a temperature of approximately 1500°C. Alternatively, the dehydration and the transparent vitrification may not be separately performed but simultaneously performed. In this case, heating is performed to a temperature of approximately 1500°C in an atmosphere in which chlorine is contained in an inert gas, and the dehydration and the transparent vitrification are performed while moving the second core rod 110 deposited with the soot body is sequentially moved to a heating section. As the inert gas, helium, argon, nitrogen, or the like may be used. By such a method, the dehydration is performed in a relatively low temperature section located at an entrance end of the heating section and having a temperature of 1000 to 1200°C, and the transparent vitrification is performed in a relatively high temperature section located at the center of the heating section and having a temperature of approximately 1500°C.

The soot layer is thus transparently vitrified to obtain the silica glass preform 1 for an optical fiber having a structure having the core portion 101 at the center, the intermediate portion 102 on the outer circumference of the core portion 101, the trench portion 103 outside the intermediate portion 102, and the cladding portion 104 outside the trench portion 103. The thickness of the cladding portion 104 to be given is adjusted so that when the core portion becomes the outer diameter of an intended optical fiber, the radius of the core portion has an optimum value. Preferably, the cladding portion 104 is previously produced to have an excessively large thickness, the refractive index distribution of the transparently vitrified preform for an optical fiber is measured, an optimal radius of the core portion 101 of an optical fiber is calculated based on the refractive index of the core portion 101 and the refractive index distribution of the intermediate portion 102, the trench portion 103, and the cladding portion 104, and a core radius/preform radius ratio is determined so that the radius of the core portion 101 becomes a calculated target value when the silica glass preform for an optical fiber is drawn to a target optical fiber radius, and the outer circumference of the cladding portion 104 is ground. According to this constitution, the optical characteristics can be more precisely designed. In the grinding of the outer circumference, a method of mechanically polishing the outer circumference with a grinding stone or the like or a method of immersing the outer circumference in a hydrofluoric acid aqueous solution or the like and chemically polishing it may be used, and these methods may be combined sequentially.

In order to align finish outer diameter of the silica glass preform 1 for an optical fiber along the longitudinal direction to suit the size of an optical fiber drawing device, it is preferable that a rod is stretched to have a predetermined diameter. In the stretching, a rod is heated and softened using a heat source such as an electric furnace, a plasma-flame burner, or an oxyhydrogen flame burner, and a tensile force is applied in the longitudinal direction, whereby the rod may be stretched so that each portion has a predetermined diameter. The stretching operation is performed in plural stages, and when a diameter contraction amount in single operation is approximately several mm to several ten mm, since the diameter accuracy is enhanced, it is preferable. The heat sources may be combined.

As described above, according to the production method of this embodiment, since an increase in Rayleigh scattering can be suppressed without adding an excess of dopant, the increase in the transmission loss can be suppressed. Further, since it is possible to reduce the mismatching at an interface due to a viscosity difference between an intermediate portion and a trench portion and suppress the structure mismatching loss, the increase in the transmission loss can be suppressed. Further, according to the production method of this embodiment, by virtue of the use of the soot method easily realizing an increase in size, it is possible to produce at low cost a silica glass preform for an optical fiber satisfying the specification of ITU-T G. 652D while matching with ITU-T G. 657 B3 in which the bending loss and the transmission loss are improved.

### [Example]

A silica glass soot body constituted of the core portion 101 and the intermediate portion 102 was produced by the VAD method. Three burners were arranged to be directed toward a rotating starting glass member, and oxygen and hydrogen for combustion and an argon gas for rectification were supplied to the respective burners to form the oxyhydrogen flame. Vaporized SiCl₄ and GeCl₄ were supplied to a first burner, and only the vaporized SiCl₄ was supplied to second and third burners. According to this constitution, since the silica glass fine particles added with Ge as the positive dopant increasing the refractive index were formed in the first burner, the silica glass fine particles were pulled up while being deposited on the tip of the starting glass member, whereby the core portion 101 was formed. Since pure silica glass fine particles containing no positive dopant were formed in the second and third burners, the fine particles were sequentially deposited around the core portion 101 during drawing up, and the intermediate portion 102 was formed. A silica glass soot body thus completed had a columnar shape in which an average density was 0.23 g/cm³, a radius ratio of the core portion 101 and the intermediate portion 102 was 0.27, and the outer diameter was 150 mm.

Next, while an atmosphere gas was supplied into a heating container of a sintering apparatus at a flow rate of 16 [l/min] of He gas, 0.45 [l/min] of Cl₂ gas, and 0.01 [l/min] of O₂ gas, the atmosphere gas was heated to a temperature of 1100 [°C]. The soot body was inserted into the heating container and then heated/dehydrated while being passed through a heating section from one end of the soot body to the other end at a speed of 10 mm/min. According to this constitution, moisture and the hydroxyl group mixed in the soot body were reacted with Cl₂ to be converted into a volatile matter, and the volatile matter was sequentially discharged together with the atmosphere gas from the heating container.

After that, an atmosphere gas composition was switched in such a state that the soot body was contained in the heating container, and the soot body was heated at a temperature of 1480 [°C] while an atmosphere gas was supplied at a flow rate of 20 [l/min] of He gas and 0.15 [l/min] of SiF₄ gas. In this state, the soot body was heated and transparently vitrified while being passed through the heating section from one end of the soot body to the other end at a speed of 10 mm/min. SiF₄ was decomposed under high temperature in the heating section, and the molar concentration of F in the atmospheres gas was about 3 [%]. The obtained first core rod 100 of transparent silica glass had an outer diameter of 65 mm. The concentration of GeO₂ added as the positive dopant to the core portion 101 was 6.5% by weight. The concentration of F added as the negative dopant to the intermediate portion 102 was 0% by weight near the interface between the intermediate portion 102 and the core portion 101 inside the intermediate portion 102 and was increased from inside toward outside, and the outermost concentration was 0.5% by weight. The ratio of the radius of the core portion 101 and the intermediate portion 102 of the transparently vitrified first core rod 100 was about 0.27%.

The first core rod 100 was heated and stretched on a glass lathe having an oxyhydrogen flame burner, whereby the outer diameter became 41 mm. The first core rod 100 was etched with an HF solution, and the outer circumference of the intermediate portion was ground, whereby the outer diameter became 36 mm. According to this constitution, the ratio of the radius of the core portion 101 and the intermediate portion 102 was 0.31.

A silica glass soot layer as the trench portion 103 was given to the ground first core rod 100 by the OVD method. The first core rod 100 was rotated about the core portion 101, the surface was first broiled with the oxyhydrogen flame burner, and a small amount of an OH group was introduced into a surface of an outermost circumferential portion of the intermediate portion. After that, vaporized SiCl₄ was introduced into the burner to form pure silica glass fine particles, and, thus, to deposit the fine particles outside the rod rotated about the core portion 101. The average density of the soot layer was 0.19 g/cm³.

The rod to which the soot layer thus deposited was given was inserted into the heating container and then heated at a temperature of 1250 [°C] while pouring 5 [l/min] of He gas and 1 [l/min] of Cl₂ gas as an atmosphere gas. The soot layer was not transparently vitrified by heating and was hardly contracted.

Subsequently to the dehydration, the soot layer was vitrified simultaneously with fluorine doping under conditions of 1 [l/min] of He gas, 2 [l/min] of SiF₉ gas, and a temperature of 1360 [°C]. (When the concentration of SiF₄ at this time is 10 to 80% by volume, a relatively flat and down-doped trench portion 103 is obtained.) The obtained transparent silica glass second core rod 110 has an outer diameter of 54 mm, and the concentration distribution of F added as the negative dopant to the trench portion 103 was nearly flat and was 1.8% by weight. The ratio of the radius of the core portion 101 and the trench portion 103 of the transparently vitrified second core rod 110 was about 0.21.

The second core rod 110 with the trench portion 103 was stretched on a glass lathe, whereby the outer diameter became 50 mm. An outer circumferential portion of the trench portion 103 was ground with an HF solution, whereby the outer diameter became 43.5 mm. The ratio of the radius of the core portion 101 and the trench portion 103 was about 0.24.

A soot layer for the cladding portion 104 was given outside the trench portion 103 of the second core rod 110 by the OVD method to be stored in a heating container, and, thus, to be transparently vitrified under conditions of 20 [l/min] of He gas, 2 [l/min] of Cl₂ gas, and a temperature of 1550 [°C]. The ratio of the radius of the cladding portion 104 and the core portion 101 was about 0.06.

After the preform 1 was stretched to have an outer diameter of 50 mm to be cut along a plane vertical to an axis in the longitudinal direction, and, thus, to be cut into round slices, whereby cut faces of both ends were mirror-polished. The concentration of the OH group in the preform 1 was analyzed along the mirror-polished cut face by an infrared spectroscopic apparatus. The OH group concentration of the core portion 101, the intermediate portion 102, and the trench portion 103 was not more than 0.1 ppm as a detection lower limit. Meanwhile, 1. 2 ppm of the OH group was locally added to the interface between the intermediate portion 102 and the trench portion 103, and 8.5 ppm of the OH group was locally added to the interface between the trench portion 103 and the cladding portion 104.

The preform 1 was drawn to produce an optical fiber having a diameter of 125 µm. When the optical characteristics of the optical fiber were measured, the optical fiber having a 2 m cutoff wavelength of 1300 nm, a 22 m cutoff wavelength of 1225 nm, a mode field diameter of 8.8 µm, and a zero dispersion wavelength of 1318 nm was obtained. When the optical fiber was wound around a mandrel having a radius of 5 mm once, loss at 1550 nm was 0.06 dB, and when the optical fiber was wound around a mandrel having a radius of 7.5 mm once, the loss at 1550 nm was 0.02 dB. The transmission losses at 1310 nm, 1383 nm, and 1550 nm were respectively 0.327 dB/km, 0.296 dB/km, and 0.188 dB/km.

In the above example, although SiF₄ was used for doping fluorine, even if another fluorine compound such as CF₄, C₂F₆, or SF₆ is used, fluorine can be similarly doped according to a composition of fluorine of the compound.

### [Comparative Example 1]

An optical fiber was produced by the same method as the above example except that SiF₄ was not added in the vitrification of the first core rod 100.

Consequently, an optical fiber having a 2 m cutoff wavelength of 1360 nm, a 22 m cutoff wavelength of 1250 nm, a mode field diameter of 8.8 µm, and a zero dispersion wavelength of 1322 nm was obtained. When the optical fiber was wound around a mandrel having a radius of 5 mm once, the loss at 1550 nm was 0.17 dB, and when the optical fiber was wound around a mandrel having a radius of 7.5 mm once, the loss at 1550 nm was 0.08 dB, so that the specification of G.657 B3 was not completely satisfied. The transmission losses at 1310 nm, 1383 nm, and 1550 nm were respectively 0.330 dB/km, 0.345 dB/km, and 0.188 dB/km.

### [Comparative Example 2]

The first core rod 100 was produced as in the above example and then stretched, and the outer circumference of the intermediate portion was ground with an HF solution. In this comparative example, a tube doped with fluorine and having a refractive index lower by 0.5% than pure silica was provided and used as a tube for the trench portion 103, and a pure silica glass tube was further provided and used as a tube for the cladding portion 104. The tube for the trench portion 103 was inserted into the tube for the cladding portion 104, and the first core rod 100 was further inserted into the tube for the trench portion 103. In this state, one end thereof was molten by being heated in an electric furnace, and gaps of the rod and the tubes was sealed. After that, while the inside was evacuated with a vacuum pump from an opening side at the other end, the tubes and the rod were heated and integrated by moving the electric furnace in the longitudinal direction. Thus, the preform 1 constituted of the core portion 101, the intermediate portion 102, the trench portion 103, and the cladding portion 104 was produced. Foams deemed to be caused by fluorine contained as the negative dopant were observed in some places at the interface between the intermediate portion 102 and the trench portion 103 and the interface between the trench portion 103 and the cladding portion 104.

After the preform 1 was stretched to have an outer diameter of 50 mm to be cut along a plane vertical to an axis in the longitudinal direction, and, thus, to be cut into round slices, whereby cut faces of both ends were mirror-polished. The concentration of the OH group in the preform 1 was analyzed along the mirror-polished cut face by an infrared spectroscopic apparatus. The OH group concentration of the core portion, the intermediate portion, and the trench portion 103 was not more than 0.1 ppm as a detection lower limit. At the same time, each OH group concentration at the interface between the intermediate portion 102 and the trench portion 103 and the interface between the trench portion 103 and the cladding portion 104 was not more than 0.1 ppm as the detection lower limit.

The preform was drawn to 125 µm to produce an optical fiber, and the optical characteristics of the optical fiber were measured. As a result, the optical fiber having a 2 m cutoff wavelength of 1347 nm, a 22 m cutoff wavelength of 1230 nm, a mode field diameter of 8.25 µm, and a zero dispersion wavelength of 1320 nm was obtained. When the optical fiber was wound around a mandrel having a radius of 5 mm once, the loss at 1550 nm was 0.06 dB, and when the optical fiber was wound around a mandrel having a radius of 7.5 mm once, the loss at 1550 nm was 0.03 dB. The transmission losses at 1310 nm, 1383 nm, and 1550 nm were respectively 0.355 dB/km, 0.324 dB/km, and 0.217 dB/km, and the transmission loss was generally relatively large, so that the structure mismatching loss became high.

The method for producing a preform for an optical fiber according to the present invention can be utilized in producing a trench type optical fiber having excellent optical characteristics.

## Claims

1. A method for producing a silica glass preform (1) for an optical fiber comprising:
producing a silica glass soot body having a core portion (101) located at the center and added with an up dopant for increasing a refractive index of silica glass and an intermediate portion (102) located on an outer circumference of the core portion (101) and having a refractive index lower than that of the core portion;
heating the silica glass soot body at a temperature for transparently vitrifying the silica glass soot body in a helium atmosphere containing a down dopant raw material and forming a first transparent silica glass core rod (100) having the intermediate portion to at least a portion of which a down dopant is added;
providing a silica glass soot layer as a trench portion (103) to an outer circumference of the first core rod (100);
heating the soot layer at a temperature for transparently vitrifying the soot layer in the helium atmosphere containing the down dopant raw material and forming a second transparent silica glass core rod (110) having the trench portion to entire of which the down dopant is added; and
providing silica glass as a cladding portion (104) to an outer circumference of the second core rod (110).

2. The production method according to claim 1, wherein in forming the first core rod (100), the down dopant is added so that the refractive index becomes lower toward outside in the intermediate portion (102).

3. The production method according to claim 1 or 2, wherein the trench portion is added with the down dopant so that the refractive index is lower than that of the intermediate portion (102).

4. The production method according to claim 3, wherein the down dopant raw material used in forming the first core rod (100) and forming the second core rod (110) is fluorine, and the down dopant raw material used in forming the second core rod (110) contains a fluorine-containing gas at a higher concentration than the helium atmosphere containing the down dopant raw material in forming the first core rod (100).

5. The production method according to claim 4, wherein the helium atmosphere containing the down dopant raw material in forming the first core rod (100) is a helium atmosphere containing 0.1 to 10% by volume of a fluorine compound gas selected from SiF₄, CF₄, C₂F₆, and SF₆, and the helium atmosphere containing the down dopant raw material in forming the second core rod (110) is a helium atmosphere containing 10 to 80% by volume of a fluorine compound gas selected from SiF₄, CF₄, C₂F₆, and SF₆.

6. The production method according to any one of claims 1 to 5, further comprising, between producing the silica glass soot body and forming the first core rod (100), a step of heating the silica glass soot body at a temperature low enough to prevent the silica glass soot body from being transparently vitrified in an atmosphere in which chlorine is contained in an inert gas.

7. The production method according to any one of claims 1 to 6, further comprising, between giving the silica glass soot layer and forming the second core rod (110), a step of heating the silica glass soot layer at a temperature low enough to prevent the silica glass soot layer from being transparently vitrified in the atmosphere in which chlorine is contained in an inert gas.

8. The production method according to any one of claims 1 to 7, further comprising at least one of a step of stretching the first core rod (100) and a step of stretching the second core rod (110).

9. The production method according to any one of claims 1 to 8, further comprising at least one of a step of removing a predetermined thickness of an outer circumference of the intermediate portion (102) of the first core rod (100) and a step of removing a predetermined thickness of an outer circumference of the trench portion of the second core rod (110).

10. The production method according to any one of claims 1 to 9, wherein density of the silica glass soot body before the transparent vitrification is more than 0.21 g/cm³.

11. The production method according to any one of claims 1 to 10, wherein density of the silica glass soot layer before the transparent vitrification is less than 0.21 g/cm³.

## Patentansprüche

1. Verfahren zum Herstellen einer Quarzglasvorform (1) für eine optische Faser, das aufweist:
Herstellen eines Quarzglas-Sootkörpers, der einen Kernabschnitt (101), der in der Mitte angeordnet ist und dem ein Auswärtsdotierstoff zum Erhöhen eines Brechungsindex des Quarzglases hinzugefügt ist, und einen Zwischenabschnitt (102) aufweist, der auf einem Außenumfang des Kernabschnitts (101) angeordnet ist und einen niedrigeren Brechungsindex als der Kernabschnitt aufweist;
Erwärmen des Quarzglas-Sootkörpers auf eine Temperatur zum transparenten Verglasen des Quarzglas-Sootkörpers in einer Heliumatmosphäre, die ein Abwärtsdotierstoffausgangsmaterial enthält, und Bilden eines ersten transparenten Quarzglas-Kernstabs (100), der den Zwischenabschnitt aufweist, wobei mindestens zu einem Abschnitt davon ein Abwärtsdotierstoff hinzugefügt ist;
Bereitstellen einer Quarzglas-Sootschicht als einen Grabenabschnitt (103) an einem Außenumfang des ersten Kernstabs (100);
Erwärmen der Sootschicht auf eine Temperatur zum transparenten Verglasen der Sootschicht in der Heliumatmosphäre, die das Abwärtsdotierstoffausgangsmaterial enthält, und Bilden eines zweiten transparenten Quarzglas-Kernstabs (110), der den Grabenabschnitt aufweist, zu dessen Gesamtheit der Abwärtsdotierstoff hinzugefügt ist; und
Bereitstellen von Quarzglas als einen Mantelabschnitt (104) an einem Außenumfang des zweiten Kernstabs (110).

2. Herstellungsverfahren nach Anspruch 1, wobei beim Bilden des ersten Kernstabs (100) der Abwärtsdotierstoff so hinzugefügt wird, dass der Brechungsindex im Zwischenabschnitt (102) zur Außenseite hin niedriger wird.

3. Herstellungsverfahren nach Anspruch 1 oder 2, wobei dem Grabenabschnitt der Abwärtsdotierstoff so hinzugefügt wird, dass der Brechungsindex niedriger als der des Zwischenabschnitts (102) ist.

4. Herstellungsverfahren nach Anspruch 3, wobei das beim Bilden des ersten Kernstabs (100) und beim Bilden des zweiten Kernstabs (110) verwendete Abwärtsdotierstoffausgangsmaterial Fluor ist, und das beim Bilden des zweiten Kernstabs (110) verwendete Abwärtsdotierstoffausgangsmaterial ein fluorhaltiges Gas mit einer höheren Konzentration als die Heliumatmosphäre beim Bilden des ersten Kernstabs (100), die das Abwärtsdotierstoffausgangsmaterial enthält.

5. Herstellungsverfahren nach Anspruch 4, wobei die Heliumatmosphäre, die das Abwärtsdotierstoffausgangsmaterial beim Bilden des ersten Kernstabs (100) enthält, eine Heliumatmosphäre ist, die 0,1 bis 10 Volumen-% eines Fluorverbindungsgases enthält, das aus SiF₄, CF₄, C₂F₆, und SF₆ ausgewählt ist, und die Heliumatmosphäre, die das Abwärtsdotierstoffausgangsmaterial beim Bilden des zweiten Kernstabs (110) enthält, eine Heliumatmosphäre ist, die 10 bis 80 Volumen-% eines Fluorverbindungsgases enthält, das aus SiF₄, CF₄, C₂F₆, und SF₆ ausgewählt ist.

6. Herstellungsverfahren nach einem der Ansprüche 1 bis 5, das ferner zwischen dem Herstellen des Quarzglas-Sootkörpers und dem Bilden des ersten Kernstabs (100) einen Schritt des Erwärmens des Quarzglas-Sootkörpers auf eine Temperatur aufweist, die niedrig genug ist, um zu verhindern, dass der Quarzglas-Sootkörper in einer Atmosphäre transparent verglast wird, in der Chlor in einem Inertgas enthalten ist.

7. Herstellungsverfahren nach einem der Ansprüche 1 bis 6, das ferner zwischen dem Bereitstellen der Quarzglas-Sootschicht und dem Bilden des zweiten Kernstabs (110) einen Schritt des Erwärmens der Quarzglas-Sootschicht auf eine Temperatur aufweist, die niedrig genug ist, um zu verhindern, dass die Quarzglas-Sootschicht in der Atmosphäre transparent verglast wird, in der Chlor in einem Inertgas enthalten ist.

8. Herstellungsverfahren nach einem der Ansprüche 1 bis 7, das ferner einen Schritt zum Recken des ersten Kernstabs (100) und/oder einen Schritt zum Recken des zweiten Kernstabs (110) aufweist.

9. Herstellungsverfahren nach einem der Ansprüche 1 bis 8, das ferner einen Schritt zum Entfernen einer vorgegebenen Dicke eines Außenumfangs des Zwischenabschnitts (102) des ersten Kernstabs (100) und/oder einen Schritt zum Entfernen einer vorgegebenen Dicke eines Außenumfangs des Grabenabschnitts des zweiten Kernstabs (110) aufweist.

10. Herstellungsverfahren nach einem der Ansprüche 1 bis 9, wobei die Dichte des Quarzglas-Sootkörpers vor der transparenten Verglasung mehr als 0,21 g/cm³ beträgt.

11. Herstellungsverfahren nach einem der Ansprüche 1 bis 10, wobei die Dichte der Quarzglas-Sootschicht vor der transparenten Verglasung weniger als 0,21 g/cm³ beträgt.

## Revendications

1. Procédé de production d'une préforme (1) en verre de silice pour une fibre optique, comprenant :
la production d'un corps de suie de verre de silice présentant une section de noyau (101) située centralement et à laquelle est ajoutée un dopant positif pour accroître l'indice de réfraction du verre de silice et une section intermédiaire (102) située sur une circonférence extérieure de la section de noyau (101) et présentant un indice de réfraction inférieur à celui de la section de noyau ;
le chauffage du corps de suie de verre de silice à une température de vitrification transparente du corps de suie de verre de silice sous une atmosphère d'hélium contenant une matière brute à dopant négatif et formant une première barre de noyau (100) de verre de silice transparente, un dopant négatif étant ajouté au moins à une partie de la section intermédiaire de celle-ci ;
la préparation d'une couche de suie de verre de silice en tant que section d'évidement (103) sur une circonférence extérieure de la première barre de noyau (100) ;
le chauffage de la couche de suie à une température de vitrification transparente de la couche de suie sous l'atmosphère d'hélium contenant la matière brute à dopant négatif et la formation d'une deuxième barre de noyau (110) de verre de silice transparente, le dopant négatif étant ajouté à l'ensemble de la section d'évidement de celle-ci ; et
la préparation de verre de silice en tant que section de gainage (104) sur une circonférence extérieure de la deuxième barre de noyau (110).

2. Procédé de production selon la revendication 1, où lors de la formation de la première barre de noyau (100), le dopant négatif est ajouté de sorte que l'indice de réfraction diminue vers l'extérieur dans la section intermédiaire (102).

3. Procédé de production selon la revendication 1 ou la revendication 2, où le dopant négatif est ajouté à la section d'évidement de manière à rendre l'indice de réfraction inférieur à celui de la section intermédiaire (102).

4. Procédé de production selon la revendication 3, où la matière brute à dopant négatif utilisée lors de la formation de la première barre de noyau (100) et formant la deuxième barre de noyau (110) est du fluor, et la matière brute à dopant négatif utilisée lors de la formation de la deuxième barre de noyau (110) contient un gaz à teneur en fluor dans une concentration supérieure à l'atmosphère d'hélium contenant la matière brute à dopant négatif lors de la formation de la première barre de noyau (100).

5. Procédé de production selon la revendication 4, où l'atmosphère d'hélium contenant la matière brute à dopant négatif lors de la formation de la première barre de noyau (100) est une atmosphère d'hélium contenant entre 0,1 et 10 % en volume d'un composé fluoré gazeux sélectionné entre SiF₄, CF₄, C₂F₆ et SF₆, et l'atmosphère d'hélium contenant la matière brute à dopant négatif lors de la formation de la deuxième barre de noyau (110) est une atmosphère d'hélium contenant entre 10 et 80 % en volume d'un composé fluoré gazeux sélectionné entre SiF₄, CF₄, C₂F₆ et SF₆.

6. Procédé de production selon l'une des revendications 1 à 5, comprenant en outre, entre la production du corps de suie de verre de silice et la formation de la première barre de noyau (100), une étape de chauffage du corps de suie de verre de silice à une température suffisamment basse pour empêcher le corps de suie de verre de silice d'être soumis à une vitrification transparente sous une atmosphère où du chlore est contenu dans un gaz inerte.

7. Procédé de production selon l'une des revendications 1 à 6, comprenant en outre, entre la préparation de la couche de suie de verre de silice et la formation de la deuxième barre de noyau (110), une étape de chauffage de la couche de suie de verre de silice à une température suffisamment basse pour empêcher le corps de suie de verre de silice d'être soumis à une vitrification transparente sous une atmosphère où du chlore est contenu dans un gaz inerte.

8. Procédé de production selon l'une des revendications 1 à 7, comprenant en outre au moins une étape d'étirage de la première barre de noyau (100) et/ou une étape d'étirage de la deuxième barre de noyau (110).

9. Procédé de production selon l'une des revendications 1 à 8, comprenant en outre au moins une étape de retrait d'une épaisseur définie d'une circonférence extérieure de la section intermédiaire (102) de la première barre de noyau (100) et une étape de retrait d'une épaisseur définie d'une circonférence extérieure de la section d'évidement de la deuxième barre de noyau (110).

10. Procédé de production selon l'une des revendications 1 à 9, où la densité du corps de suie de verre de silice avant la vitrification transparente est supérieure à 0,21 g/cm³.

11. Procédé de production selon l'une des revendications 1 à 10, où la densité de la couche de suie de verre de silice avant la vitrification transparente est inférieure à 0,21 g/cm³.
